# EUROPÄISCHE PATENTSCHRIFT

(11) **EP 0 975 905 B1**
(45) Veröffentlichungstag und Bekanntmachung des Hinweises auf die Patenterteilung: **14.05.2003**
(21) Anmeldenummer: 98904152.0
(22) Anmeldetag: 28.01.1998
(51) Int. Cl.: F16J 9/12

(54) **HUBKOLBENBRENNKRAFTMASCHINE**
INTERNAL COMBUSTION PISTON ENGINE
MOTEUR A COMBUSTION INTERNE A PISTON ALTERNATIF

(30) Priorität: 16.04.1997 DE 19715758
(43) Veröffentlichungstag der Anmeldung: 02.02.2000
(73) Patentinhaber: MAN B & W Diesel A/S, 2450 Copenhagen SV (DK)
(72) Erfinder: ANDERSEN, Erling, Bredal, DK-2630 Taastrup (DK); MOCZULSKI, Lech, DK-2650 Hvidovre (DK)
(74) Vertreter: Munk, Ludwig, Dipl.-Ing.
(86) Internationale Anmeldenummer: EP9800442
(87) Internationale Veröffentlichungsnummer: WO98046914

(56) Entgegenhaltungen:
- WO-A-94/12815
- GB-A- 2 124 332

## Beschreibung

Die Erfindung betrifft eine Hubkolbenbrennkraftmaschine, insbesondere einen Großdieselmotor, mit wenigstens einem in einem Zylinder angeordneten Kolben, der mit umlaufenden Nuten versehen ist, denen zumindest teilweise jeweils ein unter Spannung am Zylinder anliegender, offener Kolbenring zugeordnet ist, dessen Enden einen Spalt begrenzen, wobei zumindest ein offener Kolbenring mehrere, im Bereich seines Außenumfangs angeordnete Nuten aufweist.

Der von den Enden eines an den Enden offenen Kolbenrings begrenzte Spalt bildet einen Leckagedurchlass, über den der Bereich oberhalb des betreffenden Kolbenrings mit dem Bereich unterhalb dieses Kolbenrings in Verbindung steht und über den sich der Verbrennungsdruck dementsprechend von oben nach unten ausdehnen kann. Bisher besitzen die an den Enden offenen Kolbenringe nur einen Leckagedurchlass in Form des durch ihre Enden begrenzten Spalts. Hierbei kann es daher zu einer thermischen Überbeanspruchung des dem Spalt gegenüberliegenden Bereichs des jeweils nächsten Kolbenrings kommen. Dies kann zu einem Verlust der Kolbenringspannung und zu einem Bruch des betreffenden Kolbenrings führen. Ein weiterer Nachteil ist darin zu sehen, daß die lichte Weite und damit der Querschnitt des durch die Enden des Kolbenrings begrenzten Spalts mit zunehmendem Kolbenringverschleiß zunimmt. Dies führt im Laufe des Betriebs zu einem erhöhten Druckaufbau im unteren Bereich, was unerwünscht ist.

Aus der GB-A- 2124 332 ergibt sich zwar ein unter Spannung am Zylinder anliegender, offener Kolbenring, der mit umfangsseitigen Nuten versehen ist. Hierbei handelt es sich aber nicht um Leckagedurchlässe, sondern um Schmiernuten, die nicht über die Kolbenringhöhe durchgehen. Als Leckagedurchlässe fungierende Nuten sind nicht vorgesehen.

Aus der WO 94/12815 ergibt sich ein Kolbenring mit umfangsseitigen, über die Kolbenringhöhe durchgehenden Nuten. Bei diesem bekannten Kolbenring handelt es sich jedoch um einen umfangsseitig geschlossenen Kolbenring mit einander gasdicht überlappenden Enden. Im Falle von Verschleiss nimmt der Querschnitt der umfangsseitigen Nuten ab, wodurch eine Druckausdehnung nach unten reduziert wird. Die Folge davon ist, daß die Belastung des obersten Kolbenrings bis zur Bruchgefahr zunimmt, während die Druckbeanspruchung der unteren Kolbenringe unzulässig abnimmt.

Hiervon ausgehend ist es daher die Aufgabe der vorliegenden Erfindung, eine Anordnung eingangs erwähnter Art mit einfachen und kostengünstigen Mitteln so zu verbessern, daß die mechanische und thermische Beanspruchung der Kolbenringe eines Kolbenringpakets vergfeichmäßigt wird.

Diese Aufgabe wird erfindungsgemäß dadurch gelöst, daß die Leckagedurchlässe bildenden Nuten im Ausgangsszustand einen Gesamtquerschnitt aufweisen, der höchstens dem Querschnitt des von den Enden des verschlissenen Kolbenrings begrenzten Spalts entspricht.

Mit diesen Maßnahmen lassen sich die eingangs geschilderten Nachteile vollständig vermeiden. Die umfangsseitigen Nuten bilden zusätzliche Leckagedurchlässe, die zu einer zuverlässigen Vergleichmäßigung der thermischen und mechanischen Beanspruchung des jeweils unteren Kolbenrings führen. Zweckmäßig sind jeweils alle Kolbenringe eines Kolbenringpakets in vorstehend angegebener Weise ausgebildet, so daß sich eine Vergleichmäßigung über dem ganzen Kolbenringpaket ergibt. Durch die erfindungsgemäßen Maßnahmen ist sichergestellt, daß die Querschnittssumme aller Leckagedurchlässe bei Verschleiss eines erfindungsgemäßen Kolbenrings in etwa gleich bleibt. Im Falle von Verschleiss nimmt die lichte Weite des durch die Enden des Kolbenrings begrenzten Spalts zu. Gleichzeitig nimmt jedoch die Tiefe der umfangsseitigen Nuten ab, so daß die Querschnittszunahme im Bereich des Spalts ausgeglichen oder jedenfalls abgeschwächt wird, so daß über eine lange Lebensdauer hinweg die Druckbeanspruchung der Kolbenringe annähernd gleich bleibt. Die erfindungsgemäßen Maßnahmen sichern dementsprechend insgesamt eine vergleichsweise lange Lebensdauer der Kolbenringe und ergeben somit eine ausgezeichnete Gesamtwirtschaftlichkeit.

Zweckmäßige Ausgestaltungen und vorteilhafte Weiterbildungen der übergeordneten Maßnahmen sind in den Unteransprüchen angegeben.

So kann die Querschnittssumme der umfangsseitigen Nuten eines Kolbenrings vorteilhaft etwa 80 % des Querschnitts des von seinen Enden in verschlissenem Zustand begrenzten Spalts betragen. Hierbei handelt es sich um einen optimalen Erfahrungswert, der sicherstellt, daß die Querschnittssumme aller Leckagedurchlässe über eine Betriebsdauer hinweg in etwa gleich bleibt.

Eine weitere vorteilhafte Maßnahme kann darin bestehen, daß die umfangsseitigen Nuten und der von den Enden begrenzte Spalt gleichmäßig über den Umfang des zugeordneten Kolbenrings verteilt sind. Hierdurch ergibt sich eine besonders gleichmäßige Verteilung der Beanspruchungen über dem ganzen Umfang.

Vorteilhaft können alle Kolbenringe mit einem Spalt und umfangsseitigen Nuten versehen sein. Hierdurch wird sichergestellt, daß alle Kolbenringe eines Kolbenringpakets annähernd gleichen Beanspruchungen unterliegen. Gleichzeitig ergibt dies eine einfache Lagerhaltung und Montage.

Eine weitere zweckmäßige Maßnahme kann darin bestehen, daß die Nuten zumindest teilweise parallel zum von den Enden des zugehörigen Kolbenrings begrenzten, vorzugsweise gegenüber der Achse des Kolbens geneigten Spalt verlaufen. Hierdurch wird erreicht, daß die umfangsseitigen Nuten in Folge ihrer Schräge im Betrieb eine zuverlässige Rotation des betreffenden Kolbenrings bewirken, was sich ebenfalls vorteilhaft auf die Vergleichmäßigung der Beanspruchung, insbesondere die Vergleichmäßigung einer thermischen Beanspruchung einer den Kolbenringen zugeordneten, vorzugsweise kolbenseitigen Chromauflage auswirkt.

Zur Vergleichmäßigung der thermischen Belastung über der Höhe der Kolbenringe kann es ferner, zweckmäßig sein, wenn die umfangsseitigen Nuten zumindest teilweise unterschiedlich konfiguriert sind, z.B. parallele und unparallele Flanken aufweisen.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung entnehmbar.

In der nachstehend beschriebenen Zeichnung zeigen:
- Figur 1: eine Teilansicht eines Zylinder-Kolbenaggregats einer Hubkolbenbrennkraftmaschine im Schnitt und
- Figur 2: eine perspektivische Ansicht eines erfindungsgemäßen Kolbenrings.

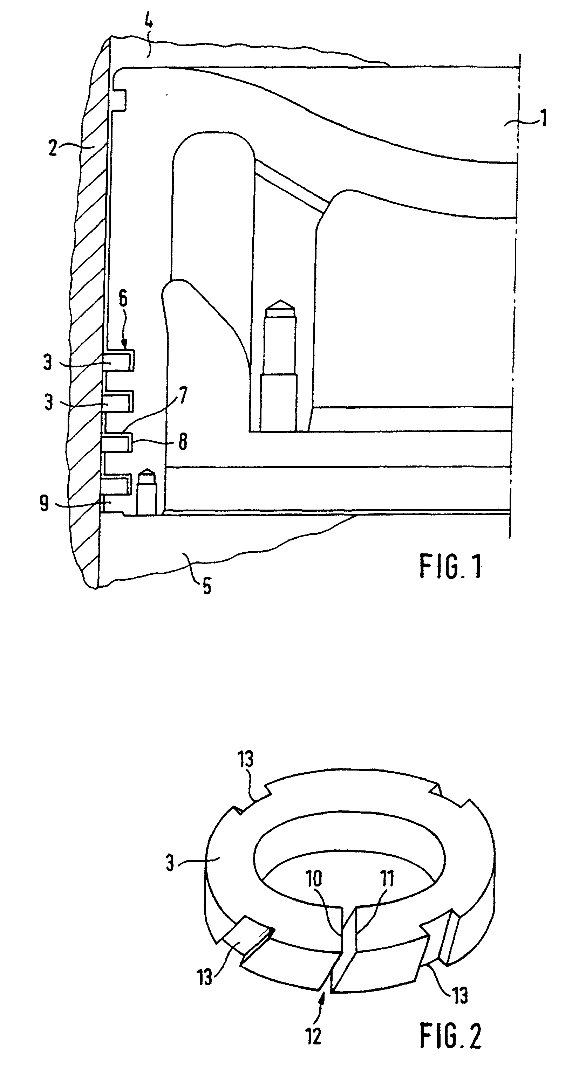

Die Figur 1 zeigt einen Kolben 1, der in einem Zyiinder 2 axial bewegbar angeordnet ist. Das hier dargestellte Zylinder-Kolbenaggregat gehört zu einer Hubkolbenbrennkraftmaschine, beispielsweise in Form eines Großdieselmotors, wie er beispiesweise als Schiffsantrieb Verwendung findet. Der Aufbau und die Wirkungsweise derartiger Hubkolbenbrennkraftmaschinen sind an sich bekannt.

Der Kolben 1 ist mit einem aus mehreren übereinander angeordneten Kolbenringen 3 bestehenden Kolbenringpaket versehen. Durch dieses Kolbenringpaket wird der oberhalb des Kolbens 1 sich befindende Verbrennungsraum 4 gegenüber dem unterhalb des Kolbens 1 sich befindenden Kurbelraum 5 abgedichtet. Die Kolbenringe 3 sind jeweils in einer zugeordneten, in den Umfang des Kolbens 1 eingeschnittenen Nut 6 aufgenommen und liegen mit ihrem Außenumfang an der Innenoberfläche des Zylinders 2 an. Die Nuten 6 besitzen gegenüber dem jeweils zugeordneten Kolbenring 3 soviel radiales und axiales Übermaß, daß sich oberhalb und radial innerhalb der Kolbenringe 3 Spalte 7, 8 ergeben. Die in diese Spalte 7, 8 eindringenden Gase bewirken eine Druckbeaufschlagung der Kolbenringe 3 in radialer und axialer Richtung.

Zwischen den umlaufenen Nuten 6 ergeben sich umlaufende Stege 9, auf denen jeweils ein zugeordneter Kolbenring 3 aufliegt. Die Auflagefläche der Stege 9 ist zur Bewerkstelligung guter Gleiteigenschaften mit einer Chromauflage versehen.

Zumindest ein Kolbenring 3 oder jedenfalls die mittleren Kolbenringe 3 sind als an ihren Enden offene Kolbenringe der in Figur 2 dargestellten Art ausgebildet. Im dargestellten, bevorzugten Beispiel soll dies auf alle vier Kolbenringe 3 zutreffen. Es wäre allerdings für Sonderfälle denkbar, den untersten und/oder den obersten Kolbenring 3 als gasdichten Kolbenring mit einander überlappenden Ringenden auszubilden.

Die einander gegenüberliegenden Enden 10, 11 der offenen Kolbenringe 3 begrenzen jeweils einen Spalt 12. Der Spalt 12 kann achsparallel verlaufen oder, wie gezeichnet, gegenüber der Achse des Kolbens 1 und dementsprechend auch des Kolbenringpakets und des einzelnen Kolbenrings 3 geneigt sein. Der diesbezügliche Winkelbereich reicht von 0° bis 45°. Der Spalt 12 fungiert als Leckagedurchlaß, über den die Verbrennungsgase vom Bereich oberhalb des betreffenden Kolbenrings 3 zum Bereich unterhalb des betreffenden Kolbenrings 3 gelangen können, so daß alle Kolbenringe 3 des Kolbenringpakets in axialer und radialer Richtung beaufschlagt werden, was eine zuverlässige Dichtwirkung ergibt.

Die vom Bereich oberhalb eines Kolbenrings 3 zum Bereich unterhalb dieses Kolbenrings 3 durchströmenden Gase treffen im Durchströmbereich auf den darunter sich befindenden Kolbenring auf. Um eine örtliche, thermische Überbeanspruchung jedes so angeströmten Kolbenrings 3 zu verhindern und eine möglichst gleichmäßige Beanspruchung zu bewirken, sind die offenen Kolbenringe 3, wie Figur 2 weiter erkennen läßt, mit im Bereich ihres Außenumfangs angeordneten Nuten 13 versehen. Diese Nuten 13, die über die ganze Kolbenringhöhe durchgehen, bilden zusätzliche Leckagedurchlässe. Die Verbrennungsgase werden dementsprechend an mehreren Stellen durchgelassen, was eine übermäßige Beanspruchung an einer Stelle eines jeweils unteren Kolbenrings 3 verhindert.

Im dargestellten Beispiel sind alle Nuten 13 des Kolbenrings 3 in gleicher Weise mit parallelen Flanken versehen, was eine besonders einfache Herstellung ermöglicht. Um die thermische Beanspruchung über der Höhe des Kolbenrings 3 zu vergleichsmäßigen kann es jedoch kann es jedoch manchmal auch zu bevorzugen sein, die Nuten 13 unterschiedlich zu gestalten und/oder mit unparallelen Flanken zu versehen.

Ebenso kann die Richtung des Verlaufs der Nuten 13 in einem großen Bereich von 0° bis 45° gewählt werden um eine gute Vergleichsmäßigung der Belastung zu erreichen. Im dargestellten Beispiel verlaufen die Nuten 13 parallel zum geneigten Spalt 12 des zugeordneten Kolbenrings 3, sind also ebenfalls gegenüber der Achse des Kolbens 1 und damit des Kolbenrings 3 geneigt. Die Neigung der Nuten 13 und des Spalts 12 ergibt eine zuverlässige Drehung des Kolbenrings 3 während des Betriebs, was die Vergleichmäßigung noch verbessert und sicherstellt, daß auch die thermische Beanspruchung der Chromauflage der Stege 9 in zulässigen Grenzen bleibt.

Die Größe und Anzahl der Nuten 13 kann über der Höhe des Kolbenringpakets variieren. Die Anzahl kann zwischen zwei und acht Nuten 13 liegen. Zwei Nuten 13 sind mindestens vorgesehen. Im dargestellten Beispiel sind vier Nuten 13 vorgesehen, Die Nuten 13 sind zweckmäßig zusammen mit dem Spalt 12 gleichmäßig am Umfang des zugeordneten Kolbenrings 3 verteilt angeordnet, so daß sich ein gleicher Winkelabstand ergibt. Hierdurch läßt sich eine besonders gute Vergfeichmäßigung der Beanspruchung eines jeweils unteren Kolbenrings erreichen.

Im Laufe des Betriebs verschleißen die Kolbenringe 3 an ihrem Außenumfang. Mit zunehmendem Verschleiß der Kolbenringe 3 nimmt daher die Tiefe der Nuten 13 ab. Die Verringerung der Kolbenringdicke wird durch eine entsprechende Aufweitung der Kolbenringe 3 ausgeglichen, wodurch sich der Spalt 12 entsprechend vergrößert. Mit zunehmendem Verschleiß nimmt dementsprechend der Querschnitt der als Leckagedurchlässe fungierenden Nuten 13 ab und gleichzeitig nimmt der Querschnitt des ebenfalls als Leckagedurchlaß fungierenden Spalts 12 zu. Diese Querschnitte sind so aufeinander abgestimmt, daß sich über längere Betriebszeiten hinweg in etwa gleiche Gesamtverhältnisse, das heißt ein etwa gleicher Summenquerschnitt ergibt. Hierzu sind die Nuten 13 zweckmäßig so ausgebildet, daß die Summe des Querschnitts aller Nuten 13 im Ausgangszustand nicht größer, zweckmäßig etwas kleiner als der Querschnitt des Spalts 12 des verschlissenen Kolbenrings 3 ist. Eine Querschnittsrate von 60 - 90 %, vorzugsweise 80 %, hat sich als besonders günstig erwiesen.

## Patentansprüche

1. Hubkolbenbrennkraftmaschine, insbesondere Großdieselmotor, mit wenigstens einem in einem Zylinder (2) angeordneten Kolben (1), der mit umlaufenden Nuten (6) versehen ist, denen zumindest teilweise jeweils ein unter Spannung am Zylinder (2) anliegender, offener Kolbenring (3) zugeordnet ist, dessen Enden (10, 11) einen Spalt (12) begrenzen, wobei zumindest ein offener Kolbenring (3) mehrere, im Bereich seines Außenumfangs angeordnete Nuten (13) aufweist, **dadurch gekennzeichnet, daß** die Leckagedurchlässe bildenden Nuten (13) im Ausgangszustand einen Gesamtquerschnitt aufweisen, der höchstens dem Querschnitt des von den Enden (10, 11) des verschlissenen Kolbenrings (3) begrenzten Spalts (12) entspricht.

2. Hubkolbenbrennkraftmaschine nach Anspruch 1, **dadurch gekennzeichnet, daß** die Nuten (13) im Ausgangszustand einen Gesamtquerschnitt aufweisen, der kleiner als der Querschnitt des von den Enden (10, 11) des verschlissenen Kolbenrings (3) begrenzten Spalts (12) ist.

3. Hubkolbenbrennkraftmaschine nach einem der vorhergehenden Ansprüche, **dadurch gekennzeichnet, daß** die Nuten (13) im Ausgangszustand einen Gesamtquerschnitt aufweisen, der 60 % bis 90%, vorzugsweise 80 %, des Querschnitts des von den Enden (10, 11) des verschlissenen Kolbenrings (3) begrenzten Spalts (12) beträgt.

4. Hubkolbenbrennkraftmaschine nach einem der vorhergehenden Ansprüche, **dadurch gekennzeichnet, daß** die umfangsseitigen Nuten (13) und der von den Enden (10, 11) begrenzte Spalt (12) gleichmäßig am Umfang des Kolbenrings (3) verteilt sind

5. Hubkolbenbrennkraftmaschine nach einem der vorhergehenden Ansprüche, **dadurch gekennzeichnet, daß** zwei bis acht umfangsseitige Nuten (13) vorgesehen sind.

6. Hubkolbenbrennkraftmaschine nach einem der vorhergehenden Ansprüche, **dadurch gekennzeichnet, daß** zumindest jeder oberhalb und/oder unterhalb eines anderen Kolbenrings (3) angeordnete Kolbenring (3) mit einem Spalt (12) und umfangsseitigen Nuten (13) versehen ist.

7. Hubkolbenbrennkraftmaschine nach einem der vorhergehenden Ansprüche, **dadurch gekennzeichnet, daß** alle Kolbenringe (3) mit einem Spalt (12) und umfangsseitigen Nuten (13) versehen sind.

8. Hubkolbenbrennkraftmaschine nach einem der vorhergehenden Ansprüche, **dadurch gekennzeichnet, daß** im Bereich der kolbenseitigen Nuten (6) eine dem jeweils zugeordneten Kolbenring (3) zugewandte Chromauflage vorgesehen ist.

9. Hubkolbenbrennkraftmaschine nach einem der vorhergehenden Ansprüche, **dadurch gekennzeichnet, daß** die Nuten (13) zumindest teilweise gleiche Konfiguration aufweisen.

10. Hubkolbenbrennkraftmaschine nach einem der vorhergehenden Ansprüche, **dadurch gekennzeichnet, daß** die Nuten (13) zumindest teilweise parallele Flanken aufweisen.

11. Hubkolbenbrennkraftmaschine nach einem der vorhergehenden Ansprüche, **dadurch gekennzeichnet, daß** die Nuten (13) zumindest teilweise parallel zum von den Enden (10, 11) des zugehörigen Kolbenrings (3) begrenzten Spalt (12) verlaufen.

12. Hubkolbenbrennkraftmaschine nach einem der vorhergehenden Ansprüche, **dadurch gekennzeichnet, daß** der Spalt (12) und/oder die Nuten (13) gegenüber der Kolbenachse geneigt sind.

13. Hubkolbenbrennkraftmaschine nach einem der vorhergehenden Ansprüche, **dadurch gekennzeichnet, daß** die Nuten (13) zumindest teilweise verschieden sind.

14. Hubkolbenbrennkraftmaschine nach einem der vorhergehenden Ansprüche, **dadurch gekennzeichnet, daß** die Anzahl und/oder Größe der umfangsseitigen Nuten (13) innerhalb der Kolbenringe (3) eines Kolbenringpakets variiert.

## Claims

1. Reciprocating piston internal combustion engine, in particular a large diesel engine, having at least one piston (1) which is disposed in a cylinder (2) and which is provided with circumferential grooves (6) with at least some of which there is associated a respective open piston ring (3) which rests, under tension, against the cylinder (2) and whose ends (10, 11) delimit a gap (12), at least one open piston ring (3) having a plurality of grooves (13) which are disposed in the region of its outer periphery, **characterised in that,** in the initial condition, the grooves (13), forming leakage ports, have a total cross-section which corresponds, at most, to the cross-section of the gap (12) delimited by the ends (10, 11) of the worn piston ring (3).

2. Reciprocating piston internal combustion engine according to claim 1, **characterised in that,** in the initial condition, the grooves (13) have a total cross-section which is smaller than the cross-section of the gap (12) delimited by the ends (10, 11) of the worn piston ring (3).

3. Reciprocating piston internal combustion engine according to one of the preceding claims, **characterised in that,** in the initial condition, the grooves (13) have a total cross-section which amounts to 60% to 90%, and preferably 80%, of the cross-section of the gap (12) delimited by the ends (10, 11) of the worn piston ring (3).

4. Reciprocating piston internal combustion engine according to one of the preceding claims, **characterised in that** the peripheral grooves (13) and the gap (12) delimited by the ends (10, 11) are uniformly distributed on the periphery of the piston ring (3).

5. Reciprocating piston internal combustion engine according to one of the preceding claims, **characterised in that** two to eight peripheral grooves (13) are provided.

6. Reciprocating piston internal combustion engine according to one of the preceding claims, **characterised in that** at least every piston ring (3) which is disposed above and/or below another piston ring (3) is provided with a gap (12) and peripheral grooves (13).

7. Reciprocating piston internal combustion engine according to one of the preceding claims, **characterised in that** all the piston rings (3) are provided with a gap (12) and peripheral grooves (13).

8. Reciprocating piston internal combustion engine according to one of the preceding claims, **characterised in that** there is provided, in the region of the grooves (6) in the piston, a chromium coating which faces towards the associated piston ring (3) in each case.

9. Reciprocating piston internal combustion engine according to one of the preceding claims, **characterised in that** the grooves (13) have the same configuration, at least in some cases.

10. Reciprocating piston internal combustion engine according to one of the preceding claims, **characterised in that** the grooves (13) have parallel flanks, at least in some cases.

11. Reciprocating piston internal combustion engine according to one of the preceding claims, **characterised in that** the grooves (13) extend, at least in some cases, parallel to the gap (12) delimited by the ends (10, 11) of the appertaining piston ring (3).

12. Reciprocating piston internal combustion engine according to one of the preceding claims, **characterised in that** the gap (12) and/or the grooves (13) are inclined in relation to the axis of the piston.

13. Reciprocating piston internal combustion engine according to one of the preceding claims, **characterised in that** the grooves (13) differ, at least in some cases.

14. Reciprocating piston internal combustion engine according to one of the preceding claims, **characterised in that** the number and/or size of the peripheral grooves (13) varies within the piston rings (3) belonging to a set of piston rings.

## Revendications

1. Moteur à combustion interne à piston alternatif, en particulier grand moteur Diesel, avec au moins un piston (1) qui est disposé dans un cylindre (2) et qui est pourvu de rainures périphériques (6) auxquelles est associé au moins en partie respectivement un segment ouvert de piston (3) s'appuyant avec pression sur le cylindre (2), les extrémités (10, 11) dudit segment de piston limitant une fente (12), au moins un segment ouvert de piston (3) présentant plusieurs rainures (13) disposées dans la zone de sa circonférence extérieure, **caractérisé par le fait que** les rainures (13) formant des passages de fuite présentent en état initial une section totale qui correspond tout au plus à la section de la fente (12) limitée par les extrémités (10, 11) du segment usé de piston (3).

2. Moteur à combustion interne à piston alternatif selon la revendication 1, **caractérisé par le fait que**, en état initial, les rainures (13) présentent une section totale qui est plus petite que la section de la fente (12) limitée par les extrémités (10, 11) du segment usé de piston (3).

3. Moteur à combustion interne à piston alternatif selon l'une des revendications précédentes, **caractérisé par le fait que**, en état initial, les rainures (13) présentent une section totale qui fait 60% à 90 %, de préférence 80 %, de la section de la fente (12) limitée par les extrémités (10, 11) du segment usé de piston (3).

4. Moteur à combustion interne à piston alternatif selon l'une des revendications précédentes, **caractérisé par le fait que** les rainures (13) disposées sur la circonférence et la fente (12) limitée par les extrémités (10, 11) sont réparties uniformément sur la circonférence du segment de piston (3).

5. Moteur à combustion interne à piston alternatif selon l'une des revendications précédentes, **caractérisé par le fait que** l'on prévoit deux à huit rainures (13) disposées sur la circonférence.

6. Moteur à combustion interne à piston alternatif selon l'une des revendications précédentes, **caractérisé par le fait qu'**au moins chaque segment de piston (3) disposé au-dessus et/ou au-dessous d'un autre segment de piston (3) est pourvu d'une fente (12) et de rainures (13) disposées sur la circonférence.

7. Moteur à combustion interne à piston alternatif selon l'une des revendications précédentes, **caractérisé par le fait que** tous les segments de piston (3) sont pourvus d'une fente (12) et de rainures (13) disposées sur la circonférence.

8. Moteur à combustion interne à piston alternatif selon l'une des revendications précédentes, **caractérisé par le fait qu'**une couche de chrome montrant vers le segment de piston (3) respectivement associé est prévue dans la zone des rainures (6) du piston.

9. Moteur à combustion interne à piston alternatif selon l'une des revendications précédentes, **caractérisé par le fait que** les rainures (13) présentent au moins en partie une configuration égale.

10. Moteur à combustion interne à piston alternatif selon l'une des revendications précédentes, **caractérisé par le fait que** les rainures (13) présentent au moins en partie des flancs parallèles.

11. Moteur à combustion interne à piston alternatif selon l'une des revendications précédentes, **caractérisé par le fait que** les rainures (13) s'étendent au moins en partie parallèlement à la fente (12) limitée par les extrémités (10, 11) du segment associé de piston (3).

12. Moteur à combustion interne à piston alternatif selon l'une des revendications précédentes, **caractérisé par le fait que** la fente (12) et/ou les rainures (13) sont inclinées par rapport à l'axe du piston.

13. Moteur à combustion interne à piston alternatif selon l'une des revendications précédentes, **caractérisé par le fait que** les rainures (13) sont différentes au moins en partie.

14. Moteur à combustion interne à piston alternatif selon l'une des revendications précédentes, **caractérisé par le fait que**, au sein des segments de piston (3) d'un paquet de segments de piston, le nombre et/ou la grandeur des rainures (13) disposées sur la circonférence varie.
